# EUROPEAN PATENT SPECIFICATION

(11) **EP 1 709 438 B1**
(45) Date of publication and mention of the grant of the patent: **04.11.2015**
(21) Application number: 04822142.8
(22) Date of filing: 08.12.2004
(51) Int. Cl.: G01N 29/28, G01N 29/22

(54) **NON-DESTRUCTIVE INSPECTION DEVICE FOR INSPECTING LIMITED-ACCES FEATURES OF A STRUCTURE**
ZERSTÖRUNGSFREIE INSPEKTIONSVORRICHTUNG ZUR INSPEKTION SCHWER ZUGÄNGLICHER ELEMENTE EINER STRUKTUR
DISPOSITIF D'INSPECTION NON DESTRUCTIF SERVANT A INSPECTER DES ELEMENTS D'UNE STRUCTURE A ACCES LIMITE

(30) Priority: 07.01.2004 US 752800
(43) Date of publication of application: 11.10.2006
(73) Proprietor: The Boeing Company, Chicago, IL 60606-1596 (US)
(72) Inventor: BOSSI, Richard, H., Renton, WA 98059-7352 (US); GEORGESON, Gary, E., Federal Way, WA 98003-8616 (US); KENNEDY, James, C., Renton, WA 98059 (US)
(74) Representative: Witte, Weller & Partner Patentanwälte mbB
(86) International application number: PCT/US2004/041130
(87) International publication number: WO 2006/006951

(56) References cited:
- GB-A- 2 198 532
- JP-A- 9 229 911
- US-A- 2 005 035
- US-A- 4 398 424
- US-A- 5 062 301
- US-A- 5 741 973
- PATENT ABSTRACTS OF JAPAN vol. 011, no. 066 (P-552), 27 February 1987 (1987-02-27) & JP 61 230056 A (HITACHI LTD; others: 01), 14 October 1986 (1986-10-14)

## Description

The present invention relates to a non-destructive inspection device for inspecting a feature of a structure, the inspection device comprising: an actuating portion having at least one magnet, wherein the actuating portion is structured for placement on a first surface of the structure such that the actuating portion is movable relative to the structure; and a first inspecting portion having an inspection sensor and at least one magnet.

Such a non-destructive inspection device is known from GB 2 198 532.

The present invention further relates to a method of inspecting a feature of a structure.

### BACKGROUND OF THE INVENTION

Non-destructive inspection of structures involves thoroughly examining a structure without harming the structure or requiring significant disassembly of the structure. Non-destructive inspection is advantageous for many applications in which a thorough inspection of the exterior and/or interior of a structure is required. For example, non-destructive inspection is commonly utilized in the aircraft industry to inspect aircraft structures for any type of internal or external damage to the structure.

Among the structures that are routinely non-destructively inspected are composite structures. In this regard, composite structures are commonly used throughout industry because of their engineering qualities, design flexibility, and low weight. As such, it is frequently desirable to inspect composite structures to identify any flaws, such as cracks, voids, or porosity, which could adversely affect the performance of the composite structure.

Various types of sensors may be utilized to perform non-destructive inspection. One or more sensors may move over the structure to be examined, and receive data regarding the structure from which internal flaws can be identified. For example, a pulse-echo, thru-transmission, or shear wave sensor may be utilized to obtain ultrasonic data, such as thickness gauging, detection of laminar defects and porosity, and/or crack detection in the structure. Resonance, pulse echo, or mechanical impedance sensors may also be utilized to provide indications of voids or porosity, such as in adhesive bondlines of the structure. The data acquired by the sensors is typically processed by a processing element, and the processed data may be presented to a user via a display.

Accessibility to the features of the structure requiring inspection is one consideration in choosing a non-destructive inspection device. Access to the feature requiring inspection may be so limited that a manual inspection by a technician is not possible. An example of a structure with limited access is an internal joint of a wing structure. More specifically, the bondlines produced by close-out joints created when the last sections of the wing are attached exemplify the limited-access features of a structure.

Limited-access features of a structure, such as the close-out joints, are difficult to fully inspect using contemporary inspection devices. Accordingly, a need exists for a convenient and reliable non-destructive inspection device to inspect limited-access features of a structure.

The document GB 2 198 532 A relates to an apparatus for performing time-of flight diffraction (TOFD) inspection of an under-water object such as an oil-well platform, including means to support two ultrasonic transducers adjacent to the surface of the object but spaced apart from each other, and means to cause one transducer to slide along the surface towards the other transducer. A slow speed of about 5 mm/sec is achieved by using the water to damp the sliding motion. The apparatus can be used to size cracks at a welded joint between two members.

The document US 5,741,973 relates to a spring release mechanism for electromagnetic acoustic transducer probe. In an electromagnetic acoustic transducer or EMAT, a spring release mechanism comprises a frame or carriage and, if necessary, at least one movement element for permitting movement across a surface of a workpiece. A magnet is movable against the surface past the frame or carriage and a base supports the magnet. The spring is connected between the frame and the base for biasing the base away from the frame to urge the magnet away from the surface.

The document US 5,462,301 relates to a scanning device for ultrasonic quality control of articles. A motion mechanism includes a suspension assembly for monitoring ultrasonic transducers. The suspension assembly includes flexible members positioned above a surface to be inspected, and has ultrasonic transducers mounted thereon and contained within a housing.

The document JP 09 229911 relates to a transmission type ultrasonic examination instrument which inspects the inside of an analyte based on the information on the ultrasonic wave which penetrated the analyte.

### BRIEF SUMMARY OF THE INVENTION

The problems posed by the prior art technology are solved by a non-destructive inspection device as mentioned at the outset, wherein the inspecting portion is structured for positioning on a surface of the structure opposite the first surface such that the inspection portion is magnetically coupled to the actuating portion so that movement of the actuating portion causes the inspection portion to move in concert with the actuating portion without the inspecting portion directly contacting the actuating portion.

Additional embodiments of the present invention include an array of sensors on the inspecting portions and/or a plurality of magnets on each actuating portion and inspecting portions. A further embodiment includes a handle on the actuating portion for manual movement of the inspection device, while an alternative embodiment includes a motorized wheel for automated movement of the inspection device. In addition, the actuating portion or the inspecting portions may include a positional encoder device to monitor the position of the inspection device. Alternative inspection sensors may be used such as laser ultrasonic transducers or optical borescopes.

A method of inspecting a structure is also provided by the present invention. To inspect the structure, an actuating portion of a non-destructive inspection device is placed on a first surface of the structure and first and second inspecting portions of the non-destructive inspection device are positioned on a surface of the structure opposite the first surface. At least one magnet in each inspecting portion magnetically couples to at least one magnet in the actuating portion. The actuating portion is moved on the surface of the structure such that the inspecting portions are moved in concert with the actuating portion. The inspection sensor creates an output that can be monitored by the technician to find flaws or defects. Accordingly, the non-destructive inspection device and inspection method provide for convenient and reliable inspection of features of a structure.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
**FIG. 1** is a perspective view of a non-destructive inspection device in accordance with one embodiment of the present invention, illustrating an actuating portion and two inspecting portions;
**FIG. 2** is an environmental view of the inspection device of **FIG.1****,** illustrating the inspection device positioned on a structure to inspect limited access features of the structure;
**FIG. 3** is a side planar view of the inspection device of **FIG.1****,** illustrating the actuating portion on a first surface of a structure and one inspecting portion positioned on a surface opposite the first surface and suspended by the magnetic coupling between the actuating portion and the inspecting portion;
**FIG. 4** is a rear planar view of the inspection device of **FIG.1****,** illustrating the actuating portion on a first-surface of the structure and the two inspecting portions positioned on a surface opposite the first surface such that the feature of the structure to be inspected is located between the inspecting portions;
**FIG. 5** is a top perspective view of the two inspecting portions of the inspection device of **FIG.1****,** illustrating the plurality of magnets and the array of inspection sensors on each inspecting portion;
**FIG. 6** is a perspective view of an actuating portion of a non-destructive inspection device in accordance with a second embodiment of the present invention, illustrating an actuating portion that includes a motorized drive wheel and a positional encoder device;
**FIG. 7** is a perspective view of a non-destructive inspection device in accordance with a third embodiment of the present invention, illustrating two inspecting portions having vertical arrays of inspection sensors; and
**FIG. 8** is a perspective view of a non-destructive inspection device in accordance with a fourth embodiment of the present invention, illustrating an inspection device with only one inspecting portion and with wireless inspection sensors.

### DETAILED DESCRIPTION OF THE INVENTION

The present invention now will be described more fully hereinafter with reference to the accompanying drawings, in which some, but not wall embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

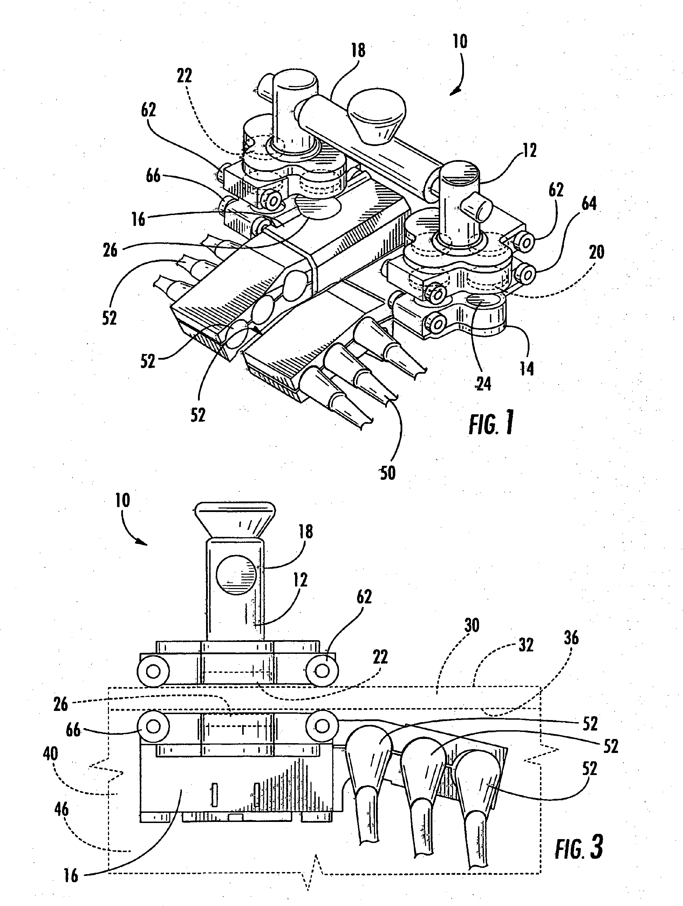

With reference to **FIGS. 1-5****,** a non-destructive inspection device **10** in accordance with one embodiment of the invention is illustrated. The non-destructive inspection device **10** includes an actuating portion **12,** a first inspecting portion **14,** and a second inspecting portion **16.** The actuating portion **12** and the inspecting portions **14** and **16** are individual portions and are not directly connected in the illustrated embodiment. The actuating portion **12** is structured for placement on a surface of the structure undergoing inspection. The inspecting portions **14** and **16** are structured for positioning on a surface opposite the surface the actuating portion is placed.

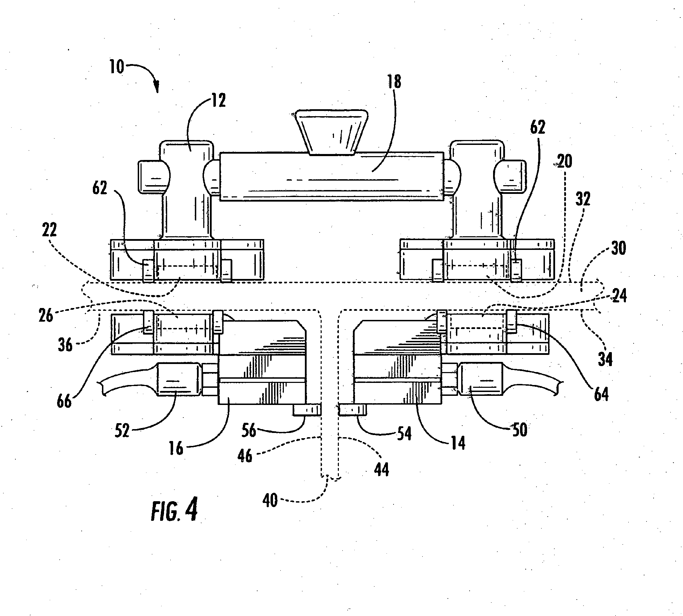

The actuating portion **12** includes at least one magnet, and preferably includes a plurality of magnets, such as four magnets in the illustrated embodiment, for magnetically coupling with each of the inspecting portions **14** and **16.** The magnetic coupling provides a remote connection between the actuating portion **12** and the inspecting portions **14** and **16** so that the inspecting portions move in concert with the actuating portion. The actuating portions **14** and **16** move in concert with the actuating portion **12** such that the actuating portions maintain substantially consistent positions relative to the actuating portion while the inspecting portions are magnetically coupled to the actuating portion. The actuating portion **12** of **FIG. 1** also includes a handle **18** that connects a first plurality of magnets **20** to a second plurality of magnets **22.** The first plurality of magnets **20** magnetically couple with a plurality of magnets **24** of the first inspecting portion **14** during operation of the inspection device **10.** Likewise, the second plurality of magnets **22** of the actuating portion **12** magnetically couple with a plurality of magnets **26** of the second inspecting portion **16** during operation of the inspection device **10.** The first plurality of magnets **20** are magnetically coupled to the plurality of magnets **24** of the first inspecting portion **14** when the actuating portion **12** and the first inspecting portion are positioned on opposite surfaces of a structure **30, as** shown in **FIG. 4****.** The magnets are advantageously positioned such that the magnets are proximate the opposed surfaces **32** and **34** of the structure **30** such that the magnetic coupling therebetween is maximized. Similarly, the second plurality of magnets **22** are magnetically coupled to the plurality of magnets **26** of the second inspecting portion **16** when the actuating portion **12** and the second inspecting portion are positioned on opposite surfaces of the structure **30,** as also shown in **FIG. 4****.** The magnets are advantageously positioned such that the magnets are proximate the opposed surfaces **32** and **36** of the structure **30** such that the magnetic coupling therebetween is maximized.

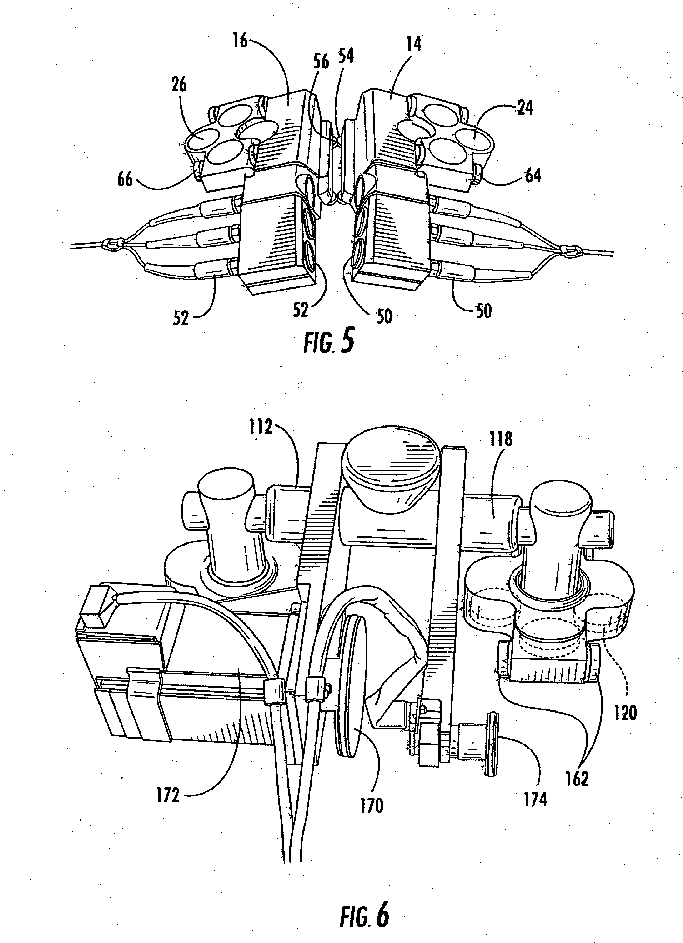

The magnets **20, 22, 24**, and **26** of the illustrated embodiment, shown in **FIGS. 1** and **5** are preferably pancake magnets formed of neodymium iron boron, which have advantageously have greater magnetic flux (around 12,000 gauss) than standard ceramic or ferrite magnets (around 3,900 gauss). Although each plurality of magnets must comprise at least one magnet, the magnets of the illustrated embodiment are arranged in sets of four for a total of sixteen magnets included in the inspection device **10.** Further embodiments of the invention may include magnets of different material, such as Samarium Cobalt or Alnico to list two non-limiting examples of alternative magnets, and/or may create the magnetic coupling with electromagnets or other magnetic coupling means. The present invention may further comprise magnetic shunting mechanisms to control the magnetic flux of the magnetic couplings, a non-limiting example being rare earth metal switched magnetic devices disclosed in U.S. Patent No. 6,180,928 that is assigned to the present assignee.

Structures **30** that may be inspected with the inspection **device 10** of the present invention may include but are not limited to composites, non-ferromagnetic metals (e.g. aluminum alloy, titanium alloy, or aluminum or titanium hybrid laminates such as GLARE or Ti/Gr), and polymers. It should be noted that the first surface **32,** the surfaces **34** and **36,** and the material therebetween, which collectively define the material through which the actuating portion **12** and the inspecting portions **14** and **16** are magnetically coupled, preferably comprise a non-ferromagnetic material because the magnetic coupling would be diminished or eliminated by a ferromagnetic material located between the actuating portion and the inspecting portions.

The pluralities of magnets support each inspecting portion **14** and **16** and keep each of the inspecting portions aligned. Each plurality of magnets **20, 22, 24**, and **26** comprises at least one individual magnet and is not limited to four magnets each. Each plurality of magnets may also be arranged in any pattern, but the plurality of magnets that are to be aligned with and magnetically coupled to one another preferably have the same pattern for maximum coupling of the magnets.

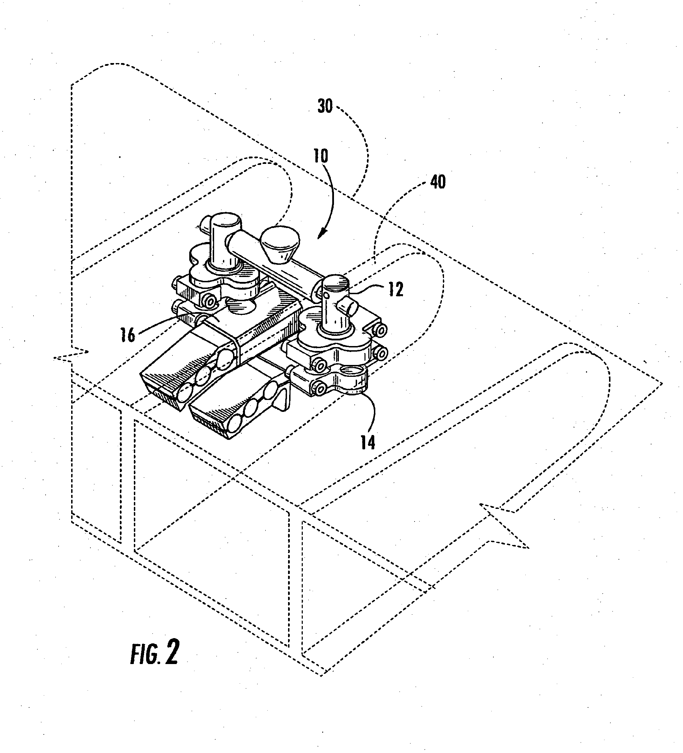

Referring to **FIGS. 2-4**, the structure **30** includes a feature **40** that extends outwardly from the surfaces **34** and **36** of the structure, such as being perpendicular thereto. As shown in **FIG. 2****,** the feature **40** of a structure **30** may be a limited-access feature such as a shear tie or spar that is bonded or fastened to the skin or joined to or protruding from the surfaces **34** and **36.** The feature **40** may also include a pi joint connecting the feature to the surfaces **34** and **36,** wherein the actual joint may be inspected by the inspection device **10.** Alternative features to be inspected may be a feature of any shape, angular orientation, size, or location. The **feature 40** of **FIG. 4** represents an interior rib of a wing structure comprising a composite material for use in the aerospace industry; however, the feature **40** may represent any portion of any structure to be non-destructively inspected. Furthermore, the feature **40** may be of any material that may be non-destructively inspected, including ferromagnetic material. If no magnetic coupling is required through the feature **40** to be inspected, a structure **30** having a feature comprising a ferromagnetic material may be inspected if the material through which the actuating portion **12** and inspecting portions **14** and **16** are magnetically coupled comprises a non-ferromagnetic material. Such a structure **30** would typically be used for non-aerospace applications because of the importance of minimal weight in aerospace applications and a ferromagnetic feature **40** would usually be heavier than a non-ferromagnetic feature such as a composite feature. The inspection sensors used to inspect a ferromagnetic feature **40** preferably are impervious to the magnetic fields created by the magnetic-couplings between the actuating portion and inspecting portions.

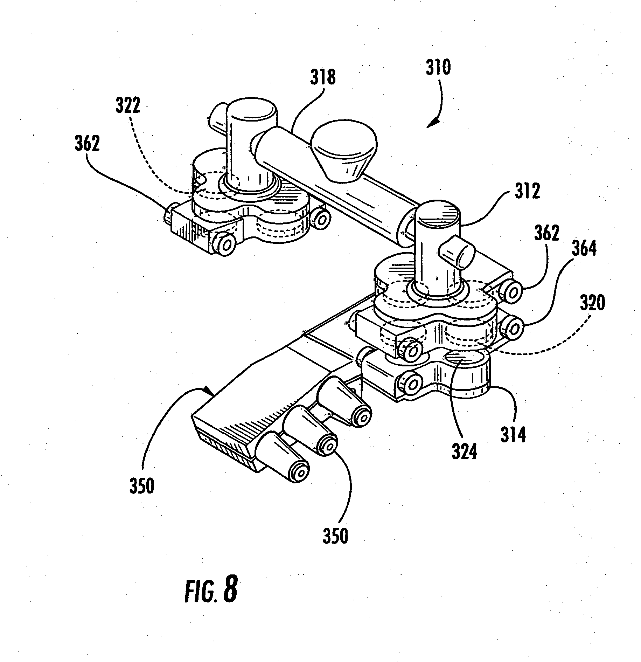

The feature **40** of the illustrated embodiment includes a first face **44** facing the first surface **34** and a second face **46** facing the second surface **36.** When the inspection device **10** is positioned on the structure **30,** as shown in **FIG. 4****,** the feature **40** is located between the first inspecting portion **14** and the second inspecting portion **16.** Further embodiments of the inspection device, such as the embodiment illustrated in **FIG. 8****,** may include only one inspecting portion with at least one inspection censor for non-destructive inspection of the feature **40,** i.e., one-sided inspection relying on the reflection of signals from within the feature or viewing the feature with an optical borescope or miniature camera. One-sided ultrasonic inspection methods such as pitch catch, pulse echo, resonance, mechanic impedance, etc. are non-limiting examples of one-sided inspection techniques of further embodiments of the present invention comprising only one inspecting portion.

The first inspecting portion **14** and the second inspecting portion **16** of **FIGS. 1-5** each include three inspection sensors. Further embodiments of the inspection device **10** may include any number of inspection sensors in various configurations. The first inspection sensor **50** of the first inspecting portion **14** are ultrasonic transmitters, while the second inspection sensors **52** of the second inspecting portion **16** are ultrasonic receivers. These inspection sensors **50** and **52** are advantageous because they do not require direct contact on the first face **44** and second face **46,** respectively, of the feature **40** and do not require a couplant. Alternative embodiments of the present invention may include other non-contact inspection sensors such as fiber-optic laser ultrasonic systems, velocimetric or mechanical impedance analysis devices, optical borescopes, miniature cameras, infrared sensors, capacitive sensors, and x-ray sources and detectors, to list a few non-limiting examples of sensors not requiring a couplant. Inspection sensors requiring a couplant may also be used. Non-limiting examples include traditional contact pulse-echo and through-transmission ultrasonic transducers, as well as UT resonance probes. In one advantageous embodiment, an inspection sensor **50** and/or **52** that does not require a couplant is used because no clean-up or collection of a couplant is required, which may be very difficult because of the limited access to the feature being inspected.

For a structure **30** comprising a ferromagnetic material in the feature **40**, but non-ferromagnetic material in the material through which the actuating portion **12** and inspecting portions **14** and **16** are magnetically coupled, as described above, the inspection sensor(s) may comprise eddy current inspection sensors to inspect the ferromagnetic feature. An example of such a structure is typically a non-aerospace application comprising ferromagnetic spars and non-ferromagnetic skins, as described above.

To maintain a predefined distance between the inspection censors **50** and **52** and the first face **44** and second face **46,** respectively, of the feature **40** and to facilitate movement of the inspecting portions **14 and 16,** rollers **54** and **56** are provided on the first inspecting portion **14** and the second inspecting portion **16,** respectively, as shown in **FIG. 4****.** The rollers **54** of the illustrated embodiment are located near the first plurality of magnets **20;** however, further embodiments of the inspection device **10** may include rollers located at any position on the first inspecting portion **14,** such as near the first inspection censors **50**. Likewise the rollers **56** of the second inspecting portion **16** may be located at any position on the second inspecting portion, but preferably mirror the rollers **54** of the first inspecting portion **14,** as shown in **FIG. 5****.** The rollers **54** and **56** also help maintain the alignment of the inspecting portions **14** and **16,** respectively. The inspecting portions **14** and **16** may, alternatively, include skids, skis, or the like for maintaining the predefined distance and for facilitating movement of the inspecting portions over the feature **40.**

Operation of the inspection device **10** consists of placing the actuating portion **12** on a first surface **32** of the structure **30** and positioning at least one inspecting portion, such as the first inspecting portion **14,** on a surface **34** opposite the first surface such that the inspecting portion is proximate the feature **40** to be inspected. The magnets **20 and 24** of each portion **12** and **14,** respectively, magnetically couple the inspecting portion to the actuating portion such that the inspecting portion is supported and aligned. To non-destructively inspect the feature **40,** the inspection sensor **50** of the inspecting portion **14** is activated such that the reflected signals received by the inspection sensor **50** are sent to a processing element for analysis and storage and, in one embodiment, for creating an output on a display that can be monitored by the technician. The displayed output, which may be data in any form such as numeric data or graphic data to list two non-limiting examples, advantageously represents the location and size of internal flaws or defects in the feature being inspected.

The actuating portion **12** is moved along the first surface **32** such that the inspecting portion **14** is correspondingly moved along the surface **34.** The inspection device **10** of **FIG. 1** may be manually moved by the technician who grasps the handle **18** to advance the actuating portion **12.** The inspection device **10** is advanced along the length of the feature **40** to fully inspect the feature, such that the processed data is preferably collected for a summary of the overall inspection results to illustrate or indicate any flaws or defects in the inspected feature. After the feature **40** is sufficiently inspected, the inspection device **10** can be removed by pulling the first inspecting portion **14** from the structure **30** to overcome the magnetic couplings and then removing the actuating portion **12.** Notably, the technician can inspect the feature **40** in a relatively blind manner since the technician generally does not need to access the surface **34** of the structure proximate the feature, other than to initially position the first inspecting portion **14** and to retrieve the first inspecting portion following the inspection.

The inspection device **10** may also be operated with two or more inspecting portions. The actuating portion **12** is placed on a first surface **32** of the structure **30,** the first inspecting portion **14** is positioned on a surface **34** opposite the first surface, and the second inspecting portion **16** is positioned on a surface **36** that is also opposite the first surface such that the feature **40** to be inspected is located between the inspecting portions. The magnets of each portion magnetically couple the inspecting portions **14** and **16** to the actuating portion **12** such that the inspecting portions are supported by the actuating portion and aligned with the actuating portion. The inspecting portions **14** and **16** are also in generally fixed relative positions with respect to each other when-each is magnetically coupled to the actuating portion **12.** To non-destructively inspect the feature **40,** the inspection censors **50** and **52** of the inspecting portions **14** and **16,** respectively, are activated such that the signals transmitted by the first inspection sensors **50** pass through the feature **40** and are received by the second inspection sensors **52** prior to being sent to a processing element for analysis and storage and, in one embodiment, for creating an output on a display that can be monitored by the technician. The actuating portion **12** is moved along the first surface **32** such that the inspecting portions **14** and **16** are correspondingly moved along the surfaces **34** and **36.** The inspection device **10** of **FIG. 1** may be manually moved by the technician who grasps the handle **18** to advance the actuating portion **12.** The inspection device **10** is advanced along the length of the feature **40** to fully inspect the feature, such that the processed data is preferably collected for a summary of the overall inspection results to illustrate or indicate any flaws or defects in the inspected feature. After the feature **40** is sufficiently inspected, the inspection device **10** can be removed by pulling the inspecting portions **14** and **16** from the structure **30** to overcome the magnetic couplings and then removing the actuating portion **12.** Similar to the inspection with one inspecting portion, the technician can inspect the feature **40** in a relatively blind manner since the technician generally does not need to access the surfaces **34** and **36** of the structure proximate the feature, other than to initially position the inspecting portions **14** and **16** and to retrieve the inspecting portions following the inspection.

A set of rollers **62,** skids, skis, or the like may be provided on the actuating portion **12** to facilitate movement of the actuating portion and a set of rollers **64,** skids, skis, or the like may be provided on the first inspecting portion **14** to facilitate movement along the surface **34.** A set of rollers **66,** skids, skis, or the like may also be included on the second inspecting portion **16** to facilitate movement along the surface **36.** In the illustrated embodiment, the sets of rollers **62**, **64,** and **66** each include four individual rollers located near the plurality of magnets of each portion such that the magnets are nominally suspended above their respective surface, as shown in **FIG. 4****,** so that the magnets do not contact the surface but maintain the magnetic coupling necessary to support and align the inspecting portions **14** and **16** such that the inspecting portions move in concert with the actuating portion **12** during the inspection of the structure. Further embodiments of the inspection device **10** may include sets of rollers, skids, skis, or the like at any location to facilitate movement of the portions of the inspection device or may include surfaces or features to facilitate the movement of the portions.

**FIG. 6** illustrates an actuating portion **112** of a second embodiment of the inspection device of the present invention. The inspecting portions of the second embodiment of the inspection device are not shown to better illustrate the features of the actuating portion **112.** The actuating portion **112** includes a motorized drive wheel **170** that is rotated by a motor **172** to provide for motorized positioning of the actuating portion **112** and the-corresponding inspecting portions. The motorized drive wheel **170** allows a technician to control the inspection device from a terminal connected to the actuating portion and the inspecting portions so that the inspection device may be remotely controlled to generate data from the inspection sensors that may be processed and displayed, such as by a processing element. Therefore, the inspection device with the actuating portion **112** of **FIG. 6** may be moved without manual contact by the technician, as required by the inspection device **10** of **FIGS. 1-****5.** The drive wheel **170** of **FIG. 6** contacts the surface of the structure that the actuating portion **112** is placed upon and advantageously includes a textured surface to provide sufficient friction so that the drive wheel does not slip relative to the surface of the structure. A motor power supply (not shown) operated by a technician or with automated equipment provides power to the motor **172** to rotate the drive wheel **170 either** forward or backward as required to perform the inspection.

The actuating portion **112** of the inspection device of **FIG. 6** also includes a positional encoder device **174.** The positional encoder device **174** advantageously provides position data for the inspection device for more accurate or informative inspection results. The positional encoder device **174,** which may be mounted to the actuating portion **112,** as illustrated in **FIG. 6****,** or to one or more inspecting portions of alternative embodiments (not shown), sends a signal to a processing element indicating the position of the actuating portion **112,** or the inspecting portions, which corresponds to the location of the inspection device. The positional encoder device **174** may measure the movement or location of the actuating portion and/or the inspecting portion(s) to which it is attached relative to any surface of the structure or relative to any frame of reference integral to the structure or independent of the structure being inspected. The processing element that advantageously receives the signal from the positional encoder device **174** may correlate the signal from the positional encoder device to the signals received from the inspection sensors so that any detected defects or flaws are accurately located on the structure. The positional encoder device **174** of **FIG. 6** is an encoder wheel that produces a signal that corresponds to the rotation of the encoder wheel that contacts the surface that the actuating portion **112** is placed upon, which further corresponds to the location of the inspection device. Further embodiments of the present invention may include a positional encoder device that alternatively measures the movement and/or location of the inspection device, a non-limiting example being an optical encoder that optically measures movement of the inspection device, for more accurate or informative inspection results.

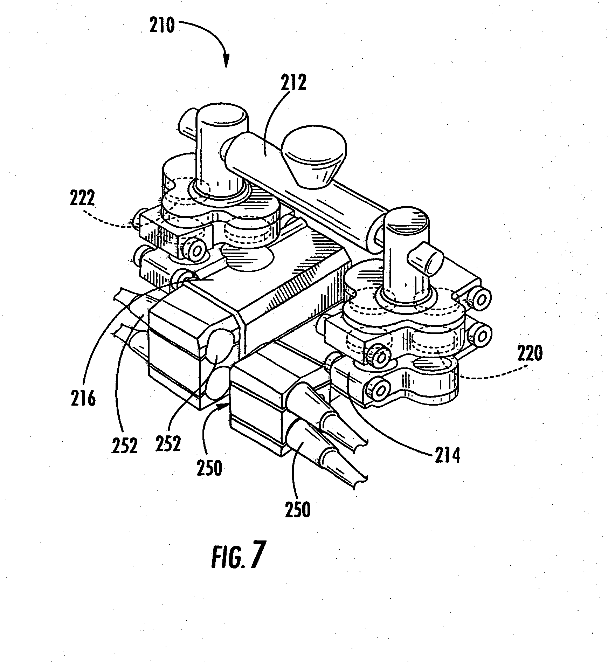

**FIG. 7** illustrates a third embodiment of the inspection device **210** that includes a first inspecting portion **214** and second inspecting portion **216,** each having a vertical array of inspection sensors **250** and **252**, respectively. Vertical arrangement of the inspection sensors **250** and **252** provides for additional inspection data during a single inspection iteration and allows inspection of areas further removed from the actuating portion **212.** Further embodiments of the inspection device may have arrays of inspection sensors in any arrangement. Non-limiting examples include the horizontal arrangement shown in **FIG. 4** or the angled arrangement shown in **FIG. 3****.** In addition, the inspection sensors may be located on the inspecting portion at any position relative to the magnets of the inspecting portion.

**FIG. 8** illustrates a fourth embodiment of the inspection device **310** of the present invention. The inspection device **310** of **FIG. 8** comprises only one inspecting portion **314** that further comprises at least one inspection sensor **350** to perform one-sided inspections as described above. In addition, the inspection sensors **350** of **FIG. 8** comprise wireless data transmission either directly or indirectly to the processing element. Examples of such wireless data communication include, but are not limited to, WiFi applications, Bluetooth applications, or other wireless LAN applications known in the art.

The inspection device of the present invention provides many improvements to non-destructive inspection techniques. The inspection device permits the inspection of features having limited access that may be difficult for a technician to reach or access. Inspections may also be conducted with or without couplants or may be performed with a single inspection sensor or a plurality of sensors arranged in various configurations. In addition, the inspection device provides for one-sided inspections of features, which is particularly advantageous when the opposite side of the feature is inaccessible. Furthermore, the inspection device provides remote control for convenient operation by the technician and simplified processing and monitoring of the inspection data. Still further improvements to non-destructive inspection techniques apparent to one skilled in the art are also provided by the inspection device of the present invention.

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A non-destructive inspection device (10; 210; 310) for inspecting a feature (40) of a structure (30), the inspection (10; 210; 310) device comprising:
an actuating portion (12; 212; 312) having a first magnet (20, 22; 220, 222; 320) and a second magnet (20, 22, 220, 222), wherein the actuating portion (12; 212; 312) is structured for placement on a first surface (32) of the structure (30) such that the actuating portion (12; 212; 312) is movable relative to the structure (30); and
a first inspecting portion (14; 214; 314) having an inspection sensor (50; 250; 350) and at least one magnet (24, 26; 324), and a second inspecting portion (16; 216) having a second inspection sensor (52; 252) and at least one magnet (26), wherein the first inspecting portion (14; 214; 314) and the second inspecting portion (16; 216) are structured for positioning on a surface (34, 36) of the structure (30) opposite the first surface (32) such that the feature (40) of the structure (30) to be inspected is located between the first inspecting portion (14; 214) and the second inspecting portion (16; 216) and such that the first inspecting portion (14; 214; 314) and the second inspecting portion (16; 216) are magnetically coupled to the actuating portion (12; 212; 312) so that movement of the actuating portion (12; 212; 312) causes the first inspecting portion (14; 214; 314) and the second inspecting portion (16; 216) to move in concert with the actuating portion (12; 212; 312) without the first inspecting portion (14; 214; 314) and the second inspecting portion (16; 216) directly contacting the actuating portion (12; 212; 312), wherein the first inspecting portion (14; 214) and the second inspecting portion (16; 216) are in a generally fixed relative position with respect to each other when each is magnetically coupled to the actuating portion (12; 212).

2. A non-destructive inspection device according to Claim 1 **characterized in that** the first inspecting portion (14; 214) includes a plurality of magnets (24), the second inspecting portion (16; 216) includes a plurality of magnets (26), and the actuating portion (12; 212) includes a first plurality of magnets (20; 220) magnetically coupled to the plurality of magnets (24) of the first inspecting portion (14; 214) and includes a second plurality of magnets (22) magnetically coupled to the plurality of magnets (26) of the second inspecting portion (16; 216).

3. A non-destructive inspection device according to Claim 2 **characterized in that** the first inspecting portion (14; 214) includes a set of rollers (64) proximate the plurality of magnets (24), the second inspecting portion (16; 216) includes a set of rollers (66) proximate the plurality of magnets (26), and the actuating portion (12; 212) includes a set of rollers (62) proximate the first plurality of magnets (20) and the second plurality of magnets (22).

4. A non-destructive inspection device according to Claim 1 **characterized in that** the inspecting portion (112) includes a positional encoder device (174) to monitor the positioning of the actuating portion.

5. A non-destructive inspection device according to Claim 1 **characterized in that** the inspection sensor (50) of the first inspecting portion (14) comprises a laser ultrasonic transducer.

6. A non-destructive inspection device according to Claim 1 **characterized in that** the inspection sensor (50) of the first inspecting portion (14) comprises an optical borescope.

7. A non-destructive inspection device according to Claim 1 wherein the first inspection sensor (50; 250) of the first inspecting portion (14; 214) comprises an ultrasonic transmitter and the second inspection sensor (52; 252) of the second inspecting portion (16; 216) comprises an ultrasonic receiver.

8. A non-destructive inspection device according to Claim 2 wherein the first inspecting portion includes an array of ultrasonic transmitters and the second inspecting portion includes an array of ultrasonic receivers.

9. A non-destructive inspection device according to Claim 3 wherein the actuating portion (12; 112; 212; 312) includes a handle (18; 118; 218; 318) for manual positioning of the actuating portion.

10. A non-destructive inspection device according to Claim 3 wherein the actuating portion (112) includes a motorized drive wheel (170) for motorized positioning of the actuating portion.

11. A non-destructive inspection device according to Claim 10 wherein the actuating portion includes a positional encoder device to monitor the positioning of the actuating portion.

12. A method of inspecting a feature (40) of a structure (30), comprising the steps of:
placing an actuating portion (12) of a non-destructive inspection device (10) on a first surface (32) of the structure (30), wherein the actuating portion (12) has at least one magnet (20, 22);
positioning a first inspecting portion (14) of the non-destructive inspection device (10) on a surface (34, 36) of the structure (30) opposite the first surface (32), wherein the first inspecting portion (14) has an inspection sensor (50, 52) and at least one magnet (24, 26) such that positioning the first inspecting portion (14) comprises magnetically coupling the magnet (20, 22) of the actuating portion (12) to the magnet (24, 26) of the inspecting portion (16);
positioning a second inspecting portion (16) of the non-destructive inspection device (10) on a surface (36) of the structure (30) opposite the first surface (32) such that the feature (40) of the structure (30) to be inspected is located between the first inspecting portion (14) and the second inspecting portion (16), wherein the second inspecting portion (16) has a second inspection sensor (52) and at least one magnet (26) such that positioning the second inspecting portion (16) comprises magnetically coupling a second magnet (26) of the actuating portion (12) to the magnet (26) of the second inspecting portion (16) such that the second inspecting portion (16) is moved in concert with the actuating portion (12) during the moving step;
moving the actuating portion (12) on the first surface (32) of the structure (30) such that the inspecting portion (14) is moved in concert with actuating portion (12); and
monitoring an output from the inspection sensor (50, 52).

13. A method according to Claim 12, further comprising the steps of:
transmitting an ultrasonic signal from the first inspection sensor (50) through the feature (40) of the structure (30) to be inspected; and
receiving the ultrasonic signal in the second inspection sensor (52) to generate the output to be monitored.

## Patentansprüche

1. Zerstörungsfreie Inspektionsvorrichtung (10; 210; 310) zum Inspizieren eines Merkmals (40) einer Struktur (30), wobei die Inspektionsvorrichtung (10; 210; 310) aufweist:
einen Betätigungsteil (12; 212; 312) mit einem ersten Magneten (20; 22; 220; 222; 320) und einem zweiten Magneten (20, 22, 220, 222), wobei der Betätigungsteil (12; 212; 312) zum Platzieren an einer ersten Oberfläche (32) der Struktur (30) strukturiert ist, so dass der Betätigungsteil (12; 212; 312) relativ zu der Struktur (30) beweglich ist; und
einen ersten Inspektionsteil (14; 214; 314) mit einem Inspektionssensor (50; 250; 350) und zumindest einem Magneten (24, 26; 324) und einen zweiten Inspektionsteil (16; 216) mit einem zweiten Inspektionssensor (52; 252) und zumindest einem Magneten (26), wobei der erste Inspektionsteil (14; 214; 314) und der zweite Inspektionsteil (16; 216) zum Positionieren an einer Oberfläche (34, 36) der Struktur (30) gegenüberliegend zu der ersten Oberfläche (32) strukturiert sind, so dass das Merkmal (40) der zu inspizierenden Struktur (30) zwischen dem ersten Inspektionsteil (14; 214) und dem zweiten Inspektionsteil (16; 216) angeordnet ist und so dass der erste Inspektionsteil (14; 214; 314) und der zweite Inspektionsteil (16; 216) magnetisch an den Betätigungsteil (12; 212; 312) gekoppelt sind, so dass eine Bewegung des Betätigungsteils (12; 212; 312) den ersten Inspektionsteil (14; 214, 314) und den zweiten Inspektionsteil (16; 216) dazu veranlasst, in Kontakt mit dem Betätigungsteil (12; 212; 312) zu treten, ohne dass der erste Inspektionsteil (14; 214; 314) und der zweite Inspektionsteil (16; 216) den Betätigungsteil (12; 212; 312) direkt berühren, wobei sich der erste Inspektionsteil (14; 214) und der zweite Inspektionsteil (16; 216) in einer allgemein fixierten relativen Position in Bezug zueinander befinden, wenn jeder magnetisch an den Betätigungsteil (12; 212) gekoppelt ist.

2. Zerstörungsfreie Inspektionsvorrichtung nach Anspruch 1, **dadurch gekennzeichnet, dass** der erste Inspektionsteil (14; 214) eine Vielzahl von Magneten (24) aufweist, wobei der zweite Inspektionsteil (16; 216) eine Vielzahl von Magneten (26) aufweist, und wobei der Betätigungsteil (12; 212) eine erste Vielzahl von Magneten (20; 220) umfasst, die magnetisch an die Vielzahl von Magneten (24) des ersten Inspektionsteils (14; 214) gekoppelt sind, und eine zweite Vielzahl von Magneten (22) umfasst, die magnetisch an die Vielzahl von Magneten (26) des zweiten Inspektionsteils (16; 216) gekoppelt sind.

3. Zerstörungsfreie Inspektionsvorrichtung nach Anspruch 2, **dadurch gekennzeichnet, dass** der erste Inspektionsteil (14; 214) einen Satz von Rollen (64) aufweist, die nahe der Vielzahl von Magneten (24) angeordnet sind, wobei der zweite Inspektionsteil (16; 216) einen Satz von Rollen (66) umfasst, die nahe der Vielzahl von Magneten (26) angeordnet sind, und wobei der Betätigungsteil (12; 212) einen Satz von Rollen (62) umfasst, die nahe der ersten Vielzahl von Magneten (20) und der zweiten Vielzahl von Magneten (22) angeordnet sind.

4. Zerstörungsfreie Inspektionsvorrichtung nach Anspruch 1, **dadurch gekennzeichnet, dass** der Inspektionsteil (112) eine Positionsgebervorrichtung (174) umfasst, um die Positionierung des Betätigungsteils zu überwachen.

5. Zerstörungsfreie Inspektionsvorrichtung nach Anspruch 1, **dadurch gekennzeichnet, dass** der Inspektionssensor (50) des ersten Inspektionsteils (14) einen Laser-Ultraschall-Umformer aufweist.

6. Zerstörungsfreie Inspektionsvorrichtung nach Anspruch 1, **dadurch gekennzeichnet, dass** der Inspektionssensor (50) des ersten Inspektionsteils (14) ein optisches Endoskop aufweist.

7. Zerstörungsfreie Inspektionsvorrichtung nach Anspruch 1, wobei der erste Inspektionssensor (50; 250) des ersten Inspektionsteils (14; 214) einen Ultraschallsender aufweist und der zweite Inspektionssensor (52; 252) des zweiten Inspektionsteils (16; 216) einen Ultraschallempfänger aufweist.

8. Zerstörungsfreie Inspektionsvorrichtung nach Anspruch, 2, wobei der erste Inspektionsteil eine Anordnung von Ultraschallsendern umfasst und wobei der zweite Inspektionsteil eine Anordnung von Ultraschallempfängern umfasst.

9. Zerstörungsfreie Inspektionsvorrichtung nach Anspruch 3, wobei der Betätigungsteil (12; 112; 212; 312) einen Handgriff (18; 118; 218; 318) zum manuellen Positionieren des Betätigungsteils umfasst.

10. Zerstörungsfreie Inspektionsvorrichtung nach Anspruch 3, wobei der Betätigungsteil (112) ein motorisiertes Antriebsrad (170) zum motorisierten Positionieren des Betätigungsteils umfasst.

11. Zerstörungsfreie Inspektionsvorrichtung nach Anspruch 10, wobei der Betätigungsteil eine Positionsgebervorrichtung umfasst, um die Positionierung des Betätigungsteils zu überwachen.

12. Verfahren zum Inspizieren eines Merkmals (40) einer Struktur (30), wobei das Verfahren die folgenden Schritte aufweist:
Platzieren eines Betätigungsteils (12) einer zerstörungsfreien Inspektionsvorrichtung (10) an einer ersten Oberfläche (32) der Struktur (30), wobei der Betätigungsteil (12) zumindest einen Magneten (20, 22) aufweist;
Positionieren eines ersten Inspektionsteils (14) der zerstörungsfreien Inspektionsvorrichtung (10) an einer Oberfläche (34, 36) der Struktur (30) gegenüberliegend zu der ersten Oberfläche (32), wobei der erste Inspektionsteil (14) einen Inspektionssensor (50, 52) und zumindest einen Magneten (24, 26) aufweist, so dass ein Positionieren des ersten Inspektionsteils (14) ein magnetisches Koppeln des Magneten (20, 22) des Betätigungsteils (20) an den Magneten (24, 26) des Inspektionsteils (16) aufweist;
Positionieren eines zweiten Inspektionsteils (16) der zerstörungsfreien Inspektionsvorrichtung (10) an einer Oberfläche (36) der Struktur (30) gegenüberliegend zu der ersten Oberfläche (32), so dass das Merkmal (40) der zu inspizierenden Struktur (30) zwischen dem ersten Inspektionsteil (14) und dem zweiten Inspektionsteil (16) angeordnet ist, wobei der zweite Inspektionsteil (16) einen zweiten Inspektionssensor (52) und zumindest einen Magneten (26) aufweist, so dass ein Positionieren des zweiten Inspektionsteils (16) ein magnetisches Koppeln eines zweiten Magneten (26) des Betätigungsteils (12) an den Magneten (26) des zweiten Inspektionsteils (16) aufweist, so dass der zweite Inspektionsteil (16) gemeinsam mit dem Betätigungsteil (12) während des Bewegungsschritts bewegt wird;
Bewegen des Betätigungsteils (12) an der ersten Oberfläche (32) der Struktur (30), so dass der Inspektionsteil (14) gemeinsam mit dem Betätigungsteil (12) bewegt wird; und
Überwachen einer Ausgabe des Inspektionssensors (50, 52).

13. Verfahren nach Anspruch 12, das des Weiteren die Schritte aufweist:
Übertragen eines Ultraschallsignals vom ersten Inspektionssensor (50) durch das Merkmal (40) der zu inspizierenden Struktur (30); und
Empfangen des Ultraschallsignals in dem zweiten Inspektionssensor (52), um die zu überwachende Ausgabe zu erzeugen.

## Revendications

1. Dispositif d'inspection non destructive (10 ; 210 ; 310) permettant l'inspection d'un élément (40) d'une structure (30), le dispositif d'inspection (10 ; 210 ; 310) comprenant :
une partie d'actionnement (12 ; 212 ; 312) comportant un premier aimant (20, 22 ; 220, 222 ; 320) et un deuxième aimant (20, 22 ; 220, 222), laquelle partie d'actionnement (12 ; 212 ; 312) est dotée d'une structure permettant sa mise en place sur une première surface (32) de la structure (30) de manière à ce que la partie d'actionnement (12 ; 212 ; 312) soit mobile par rapport à la structure (30) ; et
une première partie d'inspection (14 ; 214 ; 314) comportant un capteur d'inspection (50 ; 250 ; 350) et au moins un aimant (24, 26 ; 324), et une deuxième partie d'inspection (16 ; 216) comportant un deuxième capteur d'inspection (52 ; 252) et au moins un aimant (26), lesquelles première partie d'inspection (14 ; 214 ; 314) et deuxième partie d'inspection (16 ; 216) sont dotées d'une structure permettant leur positionnement sur une surface (34, 36) de la structure (30) opposée à la première surface (32) de manière à ce que l'élément (40) à inspecter de la structure (30) soit situé entre la première partie d'inspection (14 ; 214) et la deuxième partie d'inspection (16 ; 216) et à ce que la première partie d'inspection (14 ; 214 ; 314) et la deuxième partie d'inspection (16 ; 216) soient couplées magnétiquement à la partie d'actionnement (12 ; 212 ; 312) de telle sorte qu'un mouvement de la partie d'actionnement (12 ; 212 ; 312) provoque un mouvement de la première partie d'inspection (14 ; 214 ; 314) et de la deuxième partie d'inspection (16 ; 216) de concert avec la partie d'actionnement (12 ; 212 ; 312) sans que la première partie d'inspection (14 ; 214 ; 314) et la deuxième partie d'inspection (16 ; 216) entrent directement au contact de la partie d'actionnement (12 ; 212 ; 312), lesquelles première partie d'inspection (14 ; 214) et deuxième partie d'inspection (16 ; 216) occupent une position relative généralement fixe l'une par rapport à l'autre lorsque chacune est couplée magnétiquement à la partie d'actionnement (12 ; 212).

2. Dispositif d'inspection non destructive selon la revendication 1, **caractérisé en ce que** la première partie d'inspection (14 ; 214) comporte une pluralité d'aimants (24), la deuxième partie d'inspection (16 ; 216) comporte une pluralité d'aimants (26) et la partie d'actionnement (12 ; 212) comporte une première pluralité d'aimants (20 ; 220) couplée magnétiquement à la pluralité d'aimants (24) de la première partie d'inspection (14 ; 214) et comporte une deuxième pluralité d'aimants (22) couplée magnétiquement à la pluralité d'aimants (26) de la deuxième partie d'inspection (16 ; 216).

3. Dispositif d'inspection non destructive selon la revendication 2, **caractérisé en ce que** la première partie d'inspection (14 ; 214) comporte un jeu de galets (64) à proximité de la pluralité d'aimants (24), la deuxième partie d'inspection (16 ; 216) comporte un jeu de galets (66) à proximité de la pluralité d'aimants (26) et la partie d'actionnement (12 ; 212) comporte un jeu de galets (62) à proximité de la première pluralité d'aimants (20) et de la deuxième pluralité d'aimants (22).

4. Dispositif d'inspection non destructive selon la revendication 1, **caractérisé en ce que** la partie d'inspection (112) comporte un dispositif codeur de position (174) destiné à contrôler le positionnement de la partie d'actionnement.

5. Dispositif d'inspection non destructive selon la revendication 1, **caractérisé en ce que** le capteur d'inspection (50) de la première partie d'inspection (14) comprend un transducteur à ultrasons laser.

6. Dispositif d'inspection non destructive selon la revendication 1, **caractérisé en ce que** le capteur d'inspection (50) de la première partie d'inspection (14) comprend un endoscope optique.

7. Dispositif d'inspection non destructive selon la revendication 1, dans lequel le premier capteur d'inspection (50 ; 250) de la première partie d'inspection (14 ; 214) comprend un émetteur à ultrasons et le deuxième capteur d'inspection (52 ; 252) de la deuxième partie d'inspection (16 ; 216) comprend un récepteur à ultrasons.

8. Dispositif d'inspection non destructive selon la revendication 2, dans lequel la première partie d'inspection comporte un réseau d'émetteurs à ultrasons et la deuxième partie d'inspection comporte un réseau de récepteurs à ultrasons.

9. Dispositif d'inspection non destructive selon la revendication 3, dans lequel la partie d'actionnement (12 ; 112 ; 212 ; 312) comporte une poignée (18 ; 118 ; 218 ; 318) permettant le positionnement manuel de la partie d'actionnement.

10. Dispositif d'inspection non destructive selon la revendication 3, dans lequel la partie d'actionnement (112) comporte une roue menante motorisée (170) permettant le positionnement motorisé de la partie d'actionnement.

11. Dispositif d'inspection non destructive selon la revendication 10, dans lequel la partie d'actionnement comporte un dispositif codeur de position destiné à contrôler le positionnement de la partie d'actionnement.

12. Procédé d'inspection d'un élément (40) d'une structure (30), comprenant les étapes de :
mise en place d'une partie d'actionnement (12) d'un dispositif d'inspection non destructive (10) sur une première surface (32) de la structure (30), laquelle partie d'actionnement (12) comporte au moins un aimant (20, 22) ;
positionnement d'une première partie d'inspection (14) du dispositif d'inspection non destructive (10) sur une surface (34, 36) de la structure (30) opposée à la première surface (32), laquelle première partie d'inspection (14) comporte un capteur d'inspection (50, 52) et au moins un aimant (24, 26) de telle sorte que le positionnement de la première partie d'inspection (14) comprend le couplage magnétique de l'aimant (20, 22) de la partie d'actionnement (12) avec l'aimant (24, 26) de la partie d'inspection (16) ;
positionnement d'une deuxième partie d'inspection (16) du dispositif d'inspection non destructive (10) sur une surface (36) de la structure (30) opposée à la première surface (32) de manière à ce que l'élément (40) à inspecter de la structure (30) soit situé entre la première partie d'inspection (14) et la deuxième partie d'inspection (16), laquelle deuxième partie d'inspection (16) comporte un deuxième capteur d'inspection (52) et au moins un aimant (26) de telle sorte que le positionnement de la deuxième partie d'actionnement (16) comprend le couplage magnétique d'un deuxième aimant (26) de la partie d'actionnement (12) avec l'aimant (26) de la deuxième partie d'inspection (16) de manière à provoquer un mouvement de la deuxième partie d'inspection (16) de concert avec la partie d'actionnement (12) au cours de l'étape de mouvement ;
mouvement de la partie d'actionnement (12) sur la première surface (32) de la structure (30) de manière à provoquer un mouvement de la partie d'inspection (14) de concert avec la partie d'actionnement (12) ; et
contrôle d'une sortie du capteur d'inspection (50, 52).

13. Procédé selon la revendication 12, comprenant en outre les étapes de :
transmission d'un signal ultrasonore depuis le premier capteur d'inspection (50) à travers l'élément (40) à inspecter de la structure (30) ; et
réception du signal ultrasonore dans le deuxième capteur d'inspection (52) aux fins de générer la sortie à contrôler.
